(19) Europäisches Patentamt
European Patent Office
Office européen des brevets

(11) **EP 4 145 392 B1**

(12) **EUROPEAN PATENT SPECIFICATION**

(45) Date of publication and mention of the grant of the patent:
**18.09.2024 Bulletin 2024/38**

(21) Application number: **21214860.5**

(22) Date of filing: **15.12.2021**

(51) International Patent Classification (IPC):
**G06T 7/73** (2017.01)

(52) Cooperative Patent Classification (CPC):
**G06T 7/73; G06V 10/44; G06V 20/58; G06V 20/647;** G06T 2207/10016; G06T 2207/20072; G06T 2207/20076; G06T 2207/30252; Y02T 10/40

(54) **METHOD AND APPARATUS FOR DETERMINING THREE-DIMENSIONAL INFORMATION OF TARGET OBJECT**

VERFAHREN UND VORRICHTUNG ZUR BESTIMMUNG DER DREIDIMENSIONALEN INFORMATION EINES ZIELOBJEKTS

PROCÉDÉ ET APPAREIL PERMETTANT DE DÉTERMINER DES INFORMATIONS TRIDIMENSIONNELLES D'UN OBJET CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2021 CN 202111027428**

(43) Date of publication of application:
**08.03.2023 Bulletin 2023/10**

(73) Proprietor: **Guangzhou Xiaopeng Autopilot Technology Co., Ltd.**
**Guangzhou, Guangdong 510000 (CN)**

(72) Inventors:
• **Liu, Tao**
  **Guangzhou (CN)**
• **Liu, Langechuan**
  **Guangzhou (CN)**
• **Wang, Tao**
  **Guangzhou (CN)**
• **Mao, Yunxiang**
  **Guangzhou (CN)**
• **Wang, Pengluo**
  **Guangzhou (CN)**

(74) Representative: **Habermann, Hruschka & Schnabel**
**Patentanwälte**
**Montgelasstraße 2**
**81679 München (DE)**

(56) References cited:
**CN-A- 111 428 765    CN-A- 112 784 705 US-A1- 2021 174 537**

• **POSCHMANN JOHANNES ET AL: "Optimization based 3D Multi-Object Tracking using Camera and Radar Data", 2021 IEEE INTELLIGENT VEHICLES SYMPOSIUM (IV), IEEE, 11 July 2021 (2021-07-11), pages 1116 - 1123, XP034006308, DOI: 10.1109/IV48863.2021.9575636**

## Description

### FIELD

The present disclosure relates to the field of computer vision technologies, and particularly, to a method for determining three-dimensional information of a target object, to a vehicle using such method and to a corresponding computer-readable storage medium.

### BACKGROUND

In an intelligent driving scenario, three-dimensional information of surrounding vehicles plays a vital role in unmanned driving decision-making. At present, three-dimensional information of an object can be jointly optimized by running an object-level Simultaneous Localization and Mapping (SLAM) method based on point cloud information and the three-dimensional information of the object. However, such a method is resource-consuming, has relatively poor robustness, and is likely to fail in rain and fog, night, high speed and other scenarios. US2021/174537A1 provides a method and apparatus for detecting a target object in an image. CN111428765A discloses a target detection method based on global convolution and local deep convolution fusion.

### SUMMARY

In view of the above problems, embodiments of the present disclosure provide a method for determining three-dimensional information of a target object, to a vehicle using such method and to a corresponding computer-readable storage medium that overcome the foregoing problems or at least partially solve the foregoing problems.

The embodiments of the present disclosure disclose a computer-implemented method for determining three-dimensional information of a target object. The method includes: obtaining an image captured by a vehicle camera; and determining, based on a residual, optimized three-dimensional information of the target object in a target image, where the residual is determined based on two-dimensional information and reprojected information obtained by reprojecting three-dimensional information onto a two-dimensional plane, and the two-dimensional information and the three-dimensional information of the target object are determined in the image. The target image is a latest frame of images captured by the vehicle camera, said determining, based on the residual, the optimized three-dimensional information of the target object in a target image includes: determining the two-dimensional information and the three-dimensional information of the target object in a plurality of frames of the images in a sliding window; reprojecting the three-dimensional information corresponding to the target object in the plurality of frames of images onto the two-dimensional plane to obtain the reprojection information; respectively determining the corresponding residual based on the two-dimensional information and the reprojection information corresponding to the target object in the plurality of frames of images; and determining the optimized three-dimensional information of the target object in the target image based on the residual corresponding to the target object in the plurality of frames of images. said respectively determining the corresponding residual based on the two-dimensional information and the reprojection information corresponding to the target object in the plurality of frames of images includes: constructing a factor graph by taking pose, size, and speed of the target object in the image as nodes; obtaining a target residual expression for the target object in the image by optimizing the factor graph with a least squares problem, wherein the target residual expression is configured to represent the residual between the two-dimensional information and the reprojection information obtained by reprojecting the three-dimensional information onto the two-dimensional plane; and determining, based on the two-dimensional information and the reprojection information corresponding to the target object in the plurality of frames of images, the corresponding residual in accordance with the target residual expression. The two-dimensional information includes a two-dimensional bounding box and a two-dimensional feature line segment. The three-dimensional information includes a three-dimensional bounding box and a three-dimensional feature line segment. Said obtaining the reprojection information by reprojecting the three-dimensional bounding box corresponding to the target object in the plurality of frames of images onto the two-dimensional plane includes: reprojecting the three-dimensional bounding box corresponding to the target object in the plurality of frames of images onto the two-dimensional plane to obtain a reprojected bounding box; and reprojecting the three-dimensional feature line segment corresponding to the target object in the plurality of frames of images onto the two-dimensional plane to obtain a reprojected feature line segment. The target residual expression includes a predetermined first residual expression, a predetermined second residual expression, and a predetermined third residual expression. Said determining, based on the reprojection information and the two-dimensional information corresponding to the target object in the plurality of frames of images, the corresponding residual in accordance with the target residual expression, includes: respectively determining a first predetermined residual between the two-dimensional bounding box and the reprojected bounding box corresponding to the target object in the plurality of frames of images; respectively determining a second predetermined residual between the two-dimensional feature line segment and the reprojected feature line segment corresponding to the target object in the plurality of frames of images; and respectively determining, based on the three-dimensional bounding box of the target object in the plurality of frames of images and a predetermined motion model for the target object, a measured pose and a predicted pose of the target object in the plurality of frames of images, and determining a third predetermined residual between the measured pose and the predicted pose.

Optionally, said determining the optimized three-dimensional information of the target object in the target image based on the residual corresponding to the target object in the plurality of frames of images includes: determining the optimized three-dimensional information of the target object in the target image based on the first predetermined residual, the second predetermined residual, and the third predetermined residual corresponding to the plurality of frames of images.

Optionally, said respectively determining, based on the three-dimensional bounding box of the target object in the plurality of frames of images and the predetermined motion model for the target obj ect, the measured pose and the predicted pose of the target obj ect in the plurality of frames of images, and determining the third predetermined residual between the measured pose and the predicted pose includes: respectively determining the measured pose of the target object in the plurality of frames of images based on the three-dimensional bounding box of the target object in the plurality of frames of images and the predetermined motion model for the target object; predicting a predicted pose of the target object in a current frame of image based on a measured pose of the target object in a previous frame of image; and determining the third predetermined residual between the measured pose and the predicted pose of the target object in the plurality of frames of images.

Optionally, the predetermined motion model is a dual-wheeled vehicle motion model.

Optionally, said determining the optimized three-dimensional information of the target object in the target image based on the residual corresponding to the target object in the plurality of frames of images includes: correlating the target object in the plurality of frames of images captured by a plurality of vehicle cameras at the same moment; inter-frame tracking the plurality of frames of images captured by a same vehicle camera to correlate the target object in the plurality of frames of images; and determining the optimized three-dimensional information of the target object in the target image based on the residual corresponding to a same correlated target object in the plurality of frames of images captured by the plurality of vehicle cameras.

Optionally, a plurality of frames of images captured by the vehicle camera are determined as sample images; and said determining, based on the residual, the optimized three-dimensional information of the target object in the target image includes: determining the two-dimensional information and the three-dimensional information of the target object in the sample images; reprojecting the three-dimensional information corresponding to the target object in the sample images onto the two-dimensional plane to obtain the reprojection information; determining the corresponding residual based on the two-dimensional information and the reprojection information corresponding to the target object in the sample images; determining the optimized three-dimensional information of the target object in the sample images based on the residual corresponding to the target object in the sample images; training a three-dimensional information determination model using the sample images and the optimized three-dimensional information of the target object in the sample images; and determining the optimized three-dimensional information of the target object in the target image by using the trained three-dimensional information determination model.

The embodiments of the present disclosure further provide a vehicle, including: a processor, a memory, and a computer program stored in the memory and executable by the processor. The computer program, when executed by the processor, implement steps of the method for determining the three-dimensional information of the target object during intelligent driving as described above.

The embodiments of the present disclosure further provide a computer-readable storage medium, having a computer program stored thereon. The computer program, when executed by a processor, implement steps of the method for determining the three-dimensional information of the target object during intelligent driving as described above.

The embodiments of the present disclosure have the following advantages.

In the embodiments of the present disclosure, the image captured by the vehicle camera is obtained, the two-dimensional and three-dimensional information of the target object is determined from the image, the residual is determined based on the two-dimensional information and the reprojection information obtained by reprojecting the three-dimensional information onto the two-dimensional plane, and the optimized three-dimensional information of the target object in the target image is determined based on the residual. Instead of depending upon the 3D point cloud information, the embodiments of the present disclosure mainly rely on the two-dimensional information and the three-dimensional information determined from the two-dimensional images. Due to the relatively high measurement accuracy of the two-dimensional information in the scenarios of rain and fog, night, and high speed, the method of the present disclosure has good robustness. On the other hand, calculation scale of the embodiments of the present disclosure is much smaller than that of the object-level SLAM optimization method, and can be directly run on an in-vehicle system, thereby solving the problem that the object-level SLAM system is difficult to be transplanted to the in-vehicle system.

**BRIEF DESCRIPTION OF DRAWINGS**

FIG. 1 is a flowchart of a method for determining three-dimensional information of a target object according to an embodiment of the present disclosure.

FIG. 2 is a schematic diagram of two-dimensional feature line segments of a vehicle in an embodiment of the present disclosure.

FIG. 3 is a flowchart another method for determining three-dimensional information of a target object according to an embodiment of the present disclosure.

FIG. 4 is a schematic diagram of a factor graph in an embodiment of the present disclosure.

FIG. 5 is a schematic diagram illustrating a determination of a residual between a two-dimensional feature line segment and a reproj ection feature line segment in an embodiment of the present disclosure.

FIG. 6 is a flowchart of yet another method for determining three-dimensional information of a target object according to an embodiment of the present disclosure.

FIG. 7 is a flowchart of steps for training a three-dimensional information determination module in an embodiment of the present disclosure.

FIG. 8 is a structural block diagram of an apparatus for determining three-dimensional information of a target object according to an embodiment of the present disclosure.

**DESCRIPTION OF EMBODIMENTS**

In order to explain and describe the above obj ectives, characteristics, and advantages of the present disclosure in detail, the present disclosure will be further described in detail below in conjunction with the accompanying drawings and specific implementations.

In an intelligent driving scenario, three-dimensional information of surrounding vehicles plays a vital role in unmanned driving decision-making. In the embodiments of the present disclosure, an image detection technology in the computer vision field is adopted to detect two-dimensional and three-dimensional information of a target object in an image, without relying on point cloud data to determine the three-dimensional information. Reprojection information is obtained by reprojecting the three-dimensional information to a two-dimensional plane, a residual is determined based on the reprojection information and the two-dimensional information, and based on the residual, the three-dimensional information of the target object in the image is optimized to obtain optimized three-dimensional information.

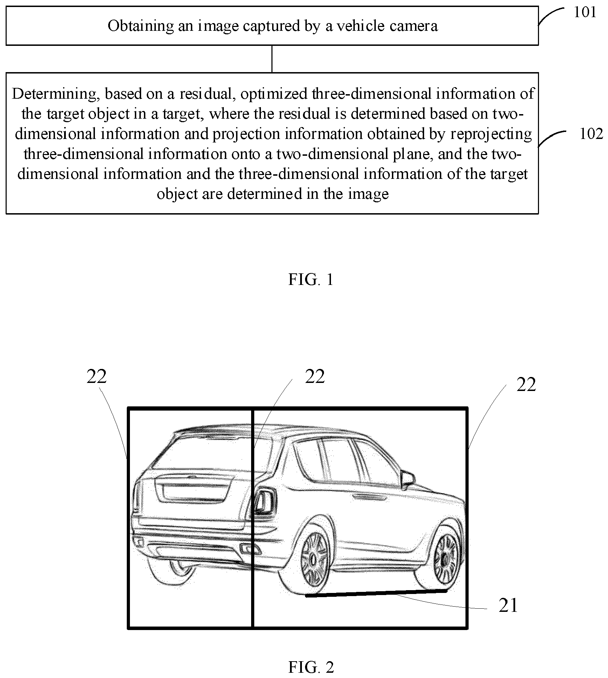

FIG. 1 illustrates a flowchart of a method for determining three-dimensional information of a target object according to the embodiment of the present disclosure. Referring to FIG. 1, the method specifically includes the following steps.

At step 101, an image captured by a vehicle camera is obtained.

In an embodiment of the present disclosure, a camera may be provided on a vehicle, and a two-dimensional image is captured by the camera. With the image detection technology in the field of computer vision, two-dimensional information and three-dimensional information of other vehicles surrounding the current vehicle can be determined from the image.

The image detection may include a two-dimensional detection and a three-dimensional detection. In the two-dimensional detection, a two-dimensional rectangular bounding box is used to surround a target object, and thus the two-dimensional information of the target object can be determined. For example, the two-dimensional information of the target object can be inferred based on deep learning. In the three-dimensional detection, a three-dimensional bounding box can be used to surround the target object, and thus the three-dimensional information of the target can be determined. For example, the three-dimensional information of the target object can be inferred based on deep learning, or the three-dimensional information can be solved based on a geometric method.

In the embodiment of the present disclosure, the two-dimensional information includes a two-dimensional bounding box of the target object and two-dimensional feature line segments of the target object. For example, with upper left corner vertex coordinates $(x1, y1)$ and lower right corner vertex coordinates $(x2, y2)$, the two-dimensional bounding box can be expressed as $(x1, y1, x2, y2)$. For example, the two-dimensional bounding box can also be represented by coordinates of a center point, a length, and a width.

The two-dimensional feature line segment is a line segment that can symbolically represent a structure of the target object in a two-dimensional plane. For example, if the target object is a vehicle, the two-dimensional feature line segments may include longitudinal vehicle boundary lines and a ground-contact line. The ground-contact line is a connection line connecting two points where two tires at a visible side of the vehicle in the image contact the ground. The longitudinal vehicle boundary lines are three or two vehicle body edge lines that are visible in the image. FIG. 2 is a schematic diagram of two-dimensional feature line segments of a vehicle in an embodiment of the present disclosure.

Referring to FIG. 2, the vehicle has one visible ground-contact line 21 and three visible vehicle body edge lines 22.

In the embodiment of the present disclosure, the three-dimensional information includes a three-dimensional bounding box and three-dimensional feature line segments. The three-dimensional bounding box can be expressed in two ways, i.e., expressed as (x1, y1, z1...x8, y8, z8) with coordinates of 8 vertices on x, y, and z axes, or expressed with a three-dimensional size, a pose angle, and a space position of the target object. The three-dimensional size may consist of a length l, a width w, a height h. The pose angle is usually expressed by Euler-rolling angle *roll*, a pitch angle *pitch*, a yaw angle *yaw.* If the target object is the vehicle, since the rolling angle and the pitch angle of the vehicle will not change in practice, the pose angle of the vehicle can be only represented by the yaw angle. The spatial position can be represented by coordinates of a center point of the target object ($x_c$, $y_c$, $z_c$). That is, the three-dimensional bounding box can be expressed as (l, h, w, $x_c$, $y_c$, $z_c$, yaw). The three-dimensional feature line segment is a line segment, matching the two-dimensional feature line segment, in the three-dimensional bounding box. After the two-dimensional feature line segment is determined, the three-dimensional feature line segment matching the two-dimensional feature line segment is determined from the three-dimensional bounding box.

At step 102, based on a residual, optimized three-dimensional information of the target object in a target image is determined, where the residual is determined based on two-dimensional information and reprojection information obtained by reprojecting three-dimensional information onto a two-dimensional plane, and the two-dimensional information and the three-dimensional information of the target object are determined in the image.

In the embodiment of the present disclosure, a plurality of frames of images consecutively captured by the vehicle camera is obtained, the two-dimensional information and the three-dimensional information of the target object in each frame of image is determined respectively; the two-dimensional information and the three-dimensional information of the target object in each frame of image is determined, the residual is determined based on the two-dimensional information and the reprojection information, and the optimized three-dimensional information of the target object in the target image is determined.

In the embodiment of the present disclosure, the image captured by the vehicle camera is obtained, the two-dimensional and three-dimensional information of the target object is determined from the image, the residual is determined based on the two-dimensional information and the reprojection information obtained by reprojecting the three-dimensional information onto the two-dimensional plane, and the optimized three-dimensional information of the target object in the target image is determined based on the residual. Instead of depending upon the 3D point cloud information, the embodiments of the present disclosure mainly rely on the two-dimensional information and the three-dimensional information determined from the two-dimensional images. Due to the relatively high measurement accuracy of the two-dimensional information in the scenarios of rain and fog, night, and high speed, the method of the present disclosure has good robustness. On the other hand, calculation scale of the embodiments of the present disclosure is much smaller than that of the object-level SLAM optimization method, and can be directly run on an in-vehicle system, thereby solving the problem that the object-level SLAM system is difficult to be transplanted to the in-vehicle system.

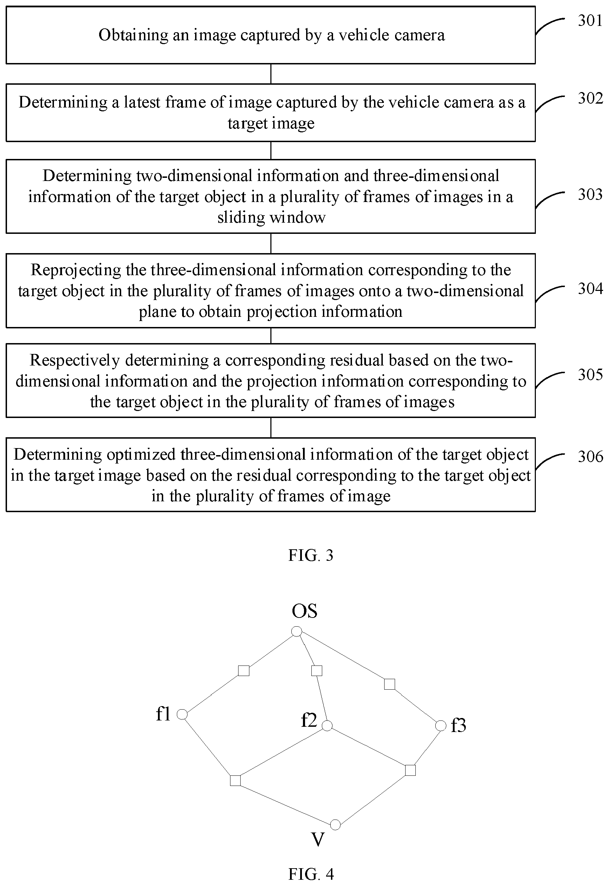

FIG. 3 illustrates a flowchart of the method for determining three-dimensional information of a target object according to an embodiment of the present disclosure. Referring to FIG. 3, the method specifically includes the following steps.

At step 301, an image captured by a vehicle camera is obtained.

At step 302, a latest frame of images captured by the vehicle camera is determined as a target image.

In practice, the method of the embodiment of the present disclosure runs in an in-vehicle system. When the latest frame of image is captured by the vehicle camera in real time, the latest frame of image is determined as the target image to obtain optimized three-dimensional information of the target object in the latest frame of image, so that the unmanned driving decision-making is performed based on the optimized three-dimensional information.

At step 303, two-dimensional information and three-dimensional information of the target object in a plurality of frames of images in a sliding window.

When the latest frame of image is captured by the vehicle camera, the sliding window slides to cover the latest frame of image, the earliest frame of image in the sliding window is deleted, and then the two-dimensional information and the three-dimensional information of the target object in the plurality of frames of images in the sliding window are determined.

At step 304, the three-dimensional information corresponding to the target object in the plurality of frames of images is reprojected onto a two-dimensional plane to obtain reprojection information.

In the embodiment, the step 304 includes the following sub-steps.

At sub-step S11, a three-dimensional bounding box corresponding to the target object in the plurality of frames of images is reprojected onto a two-dimensional plane to obtain a reprojected bounding box.

The reprojected bounding box is a bounding box obtained by reprojecting the three-dimensional bounding box onto the two-dimensional plane.

At sub-step S12, a three-dimensional feature line segment corresponding to the target object in the plurality of frames of images is reprojected onto the two-dimensional plane to obtain a reprojected feature line segment.

The reprojected feature line segment is a feature line segment obtained by reprojecting the three-dimensional feature line segment onto the two-dimensional plane.

At step 305, a corresponding residual is determined respectively based on the two-dimensional information and the reprojection information corresponding to the target object in the plurality of frames of images.

In the embodiment, the step 305 includes the following sub-steps.

At sub-step S21, a factor graph is constructed by taking pose, size, and speed of the target object in the image as nodes.

In the embodiments of the present disclosure, three-dimensional information optimization of the target object is to optimize the three-dimensional information of the target object in the target image by using the two-dimensional information and three-dimensional information of the target object in the plurality of frames of images. The three-dimensional information optimization is described through a probability model, and then the three-dimensional information optimization is expressed as a factor graph. The factor graph is composed of nodes and edges. The nodes include variable nodes corresponding to state variables and factor nodes corresponding to relations between state variables, and variable nodes and factor nodes are connected by undirected edges to represent functional relations between nodes.

FIG.4 is a schematic diagram of a factor graph in an embodiment of the present disclosure. Referring to FIG. 4, the factor graph is constructed by taking poses, sizes, and speeds of the target object in the plurality of frames of images as the variable nodes, where node OS is a size of the target object in the plurality of frames of images, node f1 is a pose of target 1 in a first frame of image, node f2 is a pose of the target object in a second frame of image, node f3 is a pose of target 1 in a third frame of image, and node V is a speed of the target object in the plurality of frames of images.

In the embodiment of the present disclosure, the pose of the target object is determined with respect to a pose of the vehicle camera. When the vehicle camera is known, the factor graph is used to optimize the pose of the target object.

For example, a sliding window strategy is used to select image frames located in a window with a predetermined length for optimization, and the factor graph is constructed by taking the pose, the size, and the speed in each frame of image as the nodes. For example, image frames are selected in a window with a length of 20 frames. When a new frame of image is added, the oldest frame of image is removed from the window.

For example, a plurality of target objects may be included in the image, and the factor graph may be used to separately optimize respective target objects.

In sub-step S22, a target residual expression is obtained for the target object in the image by optimizing the factor graph with a least squares problem. The target residual expression is configured to represent the residual between the two-dimensional information and the reprojection information obtained by reprojecting the three-dimensional information onto the two-dimensional plane.

The factor graph can be converted into the least squares problem for solving equation, and then the target residual expression for the target object of the image can be obtained. The pose of each target object is independent, and each residual equation requires that a corresponding target residual expression is determined for each target object.

At sub-step S23, based on the two-dimensional information and the reprojection information corresponding to the target object in the plurality of frames of images, the corresponding residual is determined based on the target residual expression.

The reprojection information and the two-dimensional information corresponding to each frame of image in the sliding window can be used to perform an iterative calculation based on the target residual expression, and thus the optimized three-dimensional information for the target image can be obtained.

For example, a same size may be selected for the target object in the images in the sliding window, and the size may be an average size of the target object in the plurality of frames of images.

In an embodiment of the present disclosure, the target residual expression can be expressed as:

$$O^* = argmin \sum_i \left\| e_{co\_2D}(f_i) \right\|^2 + \left\| e_{mo}(f_i) \right\|^2 + \left\| e_{ot}(f_i) \right\|^2,$$

where $O^*$ is the target residual, $e_{co\_2D}(f_i)$ is a first predetermined residual expression, $e_{mo}(f_i)$ is a second predetermined residual expression, and $e_{ot}(f_i)$ is a third predetermined residual expression.

In the embodiment, the sub-step S23 includes the following sub-steps.

At sub-step S231, a first predetermined residual between the two-dimensional bounding box and the reprojected bounding box corresponding to the target object in the plurality of frames of images is determined respectively.

The first predetermined residual is the residual between the two-dimensional bounding box and the reprojected bounding box.

In the embodiment of the present disclosure, the first predetermined residual is calculated based on the two-dimensional bounding box and the three-dimensional bounding box of the target object. Specifically, the three-dimensional bounding box is reprojected onto the two-dimensional plane to obtain the two-dimensional reprojected bounding box, and then the residual between the two-dimensional bounding box and the reprojected bounding box is calculated.

For example, the two-dimensional bounding box is expressed as $(x_{n1}, y_{n1}, x_{n2}, y_{n2})$, the reprojected bounding box is expressed as $(x_{m1}, y_{m1}, x_{m2}, y_{m2})$, and the first predetermined residual can be expressed as:

$$e_{co_{2D}} = [x_{n1}, y_{n1}, x_{n2}, y_{n2}] - [x_{m1}, y_{m1}, x_{m2}, y_{m2}],$$

where $(x_{n1}, y_{n1})$ are coordinates of an upper left corner of the two-dimensional bounding box, $(x_{n2}, y_{n2})$ are coordinates of a lower right corner of the two-dimensional bounding box; $(x_{m1}, y_{m1})$ are coordinates of an upper left corner of the reprojected bounding box, and $(x_{m2}, y_{m2})$ are the coordinates of a lower right corner of the reprojected bounding box.

$$(x_{m1}, y_{m1}) = \min \{ \pi ([\pm w, \pm h, \pm l]/2) \},$$

$$(x_{m2}, y_{m2}) = \max \{ \pi ([\pm w, \pm h, \pm l]/2) \},$$

where $\pi$ represents a process of reprojecting the three-dimensional bounding box onto the two-dimensional plane.

For example, when the target object in the image is cropped, it can be optimized based on a visible part of the two-dimensional bounding box.

At sub-step S232, a second predetermined residual between the two-dimensional feature line segment and the reprojected feature line segment corresponding to the target object in the plurality of frames of images is determined respectively.

In the embodiment of the present disclosure, the second predetermined residual is calculated based on the two-dimensional feature line segment and the three-dimensional feature line segment of the target object. Specifically, the three-dimensional feature line segment matching the two-dimensional feature line segment in the three-dimensional bounding box is determined, the three-dimensional feature line segment is reprojected onto the two-dimensional plane to obtain the reprojected feature line segment, and then the residual between the two-dimensional feature line segment and the reprojected feature line segment is calculated.

The residual between the two-dimensional feature line segment and the reprojected feature line segment can be expressed by distances between two end points of the reprojected feature line segment and the two-dimensional feature line segment. An average value of the distances between the two end points of the reprojected feature line segment and the two-dimensional feature line segment is determined as the residual.

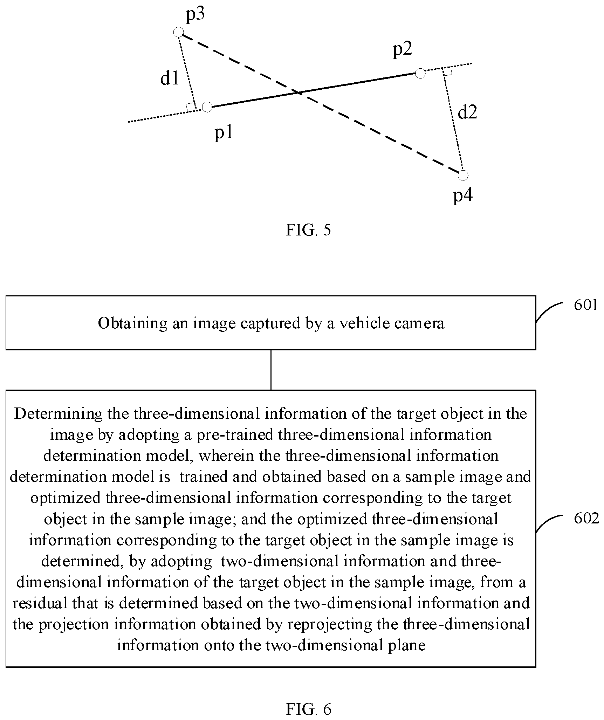

FIG. 5 is a schematic diagram of determination of a residual between a two-dimensional feature line segment and a reprojected feature line segment in an embodiment of the present disclosure. Referring to FIG. 5, taking a wheel-ground feature line segment as an example, the detected two-dimensional wheel-ground feature line segment has two end points of $P_1(x_{p1}, y_{p1})$ and $P_2(x_{p2}, y_{p2})$, a three-dimensional wheel-ground feature line segment matching the two-dimensional wheel-ground feature line segment in the three-dimensional bounding box is determined; and the three-dimensional wheel-ground feature line segment is reprojected onto the two-dimensional plane to obtain a reprojected wheel-ground feature line segment, which has two end points of $P_3(x_{p3}, y_{p3})$ and $P_4(x_{p4}, y_{p4})$.

The residual between the two-dimensional wheel-ground feature line segment and the reprojected wheel-ground feature line segment can be expressed as: $e_{ot} = (d_1 + d_2)/2$, where $d_1$ is a distance between an end point $P_3$ of the reprojected wheel-ground feature line segment and the two-dimensional wheel-ground feature line segment, and $d_2$ is a distance between the other end point $P_4$ of the reprojected wheel-ground feature line segment and the two-dimensional wheel-ground feature line segment.

$$d_1 = \frac{|x_{p3}*A + y_{p3}*B + C|}{\sqrt{A^2 + B^2}}, d_2 = \frac{|x_{p4}*A + y_{p4}*B + C|}{\sqrt{A^2 + B^2}}, A = (y_{p1}*1 - 1*y_{p2}), B = (1*x_{p2} - x_{p1}*1), \text{ and } C = (x_{p1}*y_{p2} - y_{p1}*x_{p2}).$$

In an embodiment of the present disclosure, a plurality of two-dimensional feature line segments of the target object can be identified from the image, the matching three-dimensional feature line segments in the three-dimensional bounding box can be identified based on the respective two-dimensional feature line segments, and the second predetermined residual is calculated based on each two-dimensional feature line segment and the reprojected feature line segment of the matching three-dimensional feature line segment.

For example, one ground-contact line of the target object or no ground-contact line of the target object can be identified from the image, and two or three longitudinal vehicle boundary lines can be identified from the image.

For example, when the target object in the image is cropped, it can be optimized based on a visible part of the ground-contact line and the longitudinal vehicle boundary lines.

At sub-step S233, based on the three-dimensional bounding box of the target object in the plurality of frames of images and a predetermined motion model for the target object, a measured pose and a predicted pose of the target object in the plurality of frames of images are determined respectively, and a third predetermined residual between the measured pose and the predicted pose is determined.

In the embodiment, the sub-step S233 further includes the following sub-steps.

At sub-step S2331, the measured pose of the target object in the plurality of frames of images is respectively determined based on the three-dimensional bounding box of the target object in the plurality of frames of images and the predetermined motion model for the target obj ect.

Specifically, the measured pose of the target object in the plurality of frames of images may be respectively determined based on the three-dimensional bounding box of the target object in the plurality of frames of images and a dual-wheeled vehicle motion model for the target object.

The predetermined motion model of the target object is a model configured to estimate a motion of the target object. In an optional embodiment, a dual-wheeled vehicle motion model may be selected as the motion model of the vehicle, and the measured pose of the target object in each frame of image can be determined based on the three-dimensional bounding box of each frame of image and the dual-wheeled vehicle motion model for the target obj ect.

The dual-wheeled vehicle motion model can simulate the motion of the vehicle, and a pose of the motion of the vehicle is expressed with a vehicle coordinate position (x, y) and the yaw angle θ. Compared with a constant-speed vehicle motion model, the dual-wheeled vehicle motion model has a more accurate description for the motion of the vehicle and a better tracking effect on the target vehicle.

At sub-step S2332, based on a measured pose of the target object in a previous frame of image, a predicted pose of the target object in a current frame of image is obtained through prediction.

For example, the measured pose of the vehicle in one frame of image can be expressed as $[t_x, t_y, 0]$, where $t_x$ is a state variable of x coordinate, $t_y$ is a state variable of y coordinate, and θ is a yaw angle.

The predicted pose can be expressed as:

$$\begin{bmatrix} t'_x \\ t'_y \\ \theta' \end{bmatrix} = \begin{bmatrix} t_x \\ t_y \\ \theta \end{bmatrix}_i + v\Delta t \begin{bmatrix} \cos(\theta) \\ \sin(\theta) \\ \tan(\varphi)/L \end{bmatrix},$$

where $v\Delta t \begin{bmatrix} \cos(\theta) \\ \sin(\theta) \\ \tan(\varphi)/L \end{bmatrix}$ is a pose conversion matrix, v represents a speed of the vehicle, φ represents a rotation angle of the vehicle , and L represents a wheelbase of the vehicle.

For example, the third predetermined residual can be expressed as: $e_{mo} = [t'_x, t'_y, \theta'] - [t_x, t_y, \theta]_{i+1}$ .

At sub-step S2333, the third predetermined residual between the measured pose and the predicted pose of the target object in the plurality of frames of images is determined.

At step 306, the optimized three-dimensional information of the target object is determined in the target image based on the residual corresponding to the target object in the plurality of frames of images. Specifically, the optimized three-dimensional information of the target object in the target image can be determined through iterative optimization of the residual using the Levenberg-Marquardt (LM) algorithm.

The residual corresponding to the target object in the image includes a first predetermined residual, a second predetermined residual, and a third predetermined residual. The optimized three-dimensional information of the target object in the target image is determined based on the first predetermined residual, the second predetermined residual, and the third predetermined residual corresponding to the plurality of frames of images.

In an optional embodiment, the step 306 may include: sub-step S31 of correlating the target object in the plurality of frames of images captured by a plurality of vehicle cameras at the same moment; sub-step S32 of inter-frame tracking the plurality of frames of images captured by the same vehicle camera to correlate the target object in the plurality of frames of images; and sub-step S33 of determining the optimized three-dimensional information of the target object in the target image based on the residual corresponding to a same correlated target object in the plurality of frames of images captured by the plurality of vehicle cameras.

When the vehicle includes a plurality of vehicle cameras, each vehicle camera can specifically capture a plurality of frames of images in different areas, the target object in the images captured by the plurality of vehicle cameras at the same moment can be correlated; the plurality of frames of images captured by the same vehicle camera is inter-frame tracked to correlate the target object in the plurality of frames of images; using the two-dimensional information and the three-dimensional information of the same correlated target object in the plurality of frames of images captured by the plurality of vehicle cameras, the optimized three-dimensional information of the target object in the target image is determined based on the residual, which is determined based on the two-dimensional information and the reprojection information obtained by reprojecting the three-dimensional information onto the two-dimensional plane.

In an optional embodiment, when the vehicle includes one single vehicle camera, the plurality of images captured by the single vehicle camera can be inter-frame tracked to correlate the target object in the plurality of frames of images. Using the two-dimensional information and the three-dimensional information of the same correlated target object, the optimized three-dimensional information of the target object in the target image can be determined based on the residual, which is determined based on the two-dimensional information and the reprojection information obtained by reprojecting the three-dimensional information onto the two-dimensional plane.

FIG. 6 illustrates a flowchart of another method for determining three-dimensional information of a target object according to an embodiment of the present disclosure. Referring to FIG. 6, the method may specifically include the following steps.

At step 601, an image captured by a vehicle camera is obtained.

At step 602, three-dimensional information of a target object in the image is determined by adopting a pre-trained three-dimensional information determination model. The three-dimensional information determination model is trained and obtained based on a sample image and optimized three-dimensional information corresponding to the target object in the sample image. The optimized three-dimensional information corresponding to the target object in the sample image is determined, by adopting two-dimensional information and three-dimensional information of the target object in the sample image, from a residual that is determined based on the two-dimensional information and the reprojection information obtained by reprojecting the three-dimensional information onto the two-dimensional plane.

In the embodiment of the present disclosure, the method for determining three-dimensional information of a target object can be applied to an offline automatically marked scenario. In the offline automatically marked scenario, the image captured by the vehicle camera can be directly input to the pre-trained three-dimensional information determination model, and the three-dimensional information of the target object in the image can be directly determined through the three-dimensional information determination model, thereby completing the automatically marking of the image.

In the embodiments of the present disclosure, the image captured by the vehicle camera can be obtained; and the three-dimensional information of the target object in the image can be determined through the three-dimensional information determination model pre-trained based on the sample image and the corresponding optimized three-dimensional information. In the embodiment of the present disclosure, the three-dimensional information of the target object in the image is quickly labeled, thereby saving marking time; and the three-dimensional information determination model is trained and obtained based on the optimized three-dimensional information, thereby improving detection accuracy of the three-dimensional information of the target object in the image and improve quality of the marking.

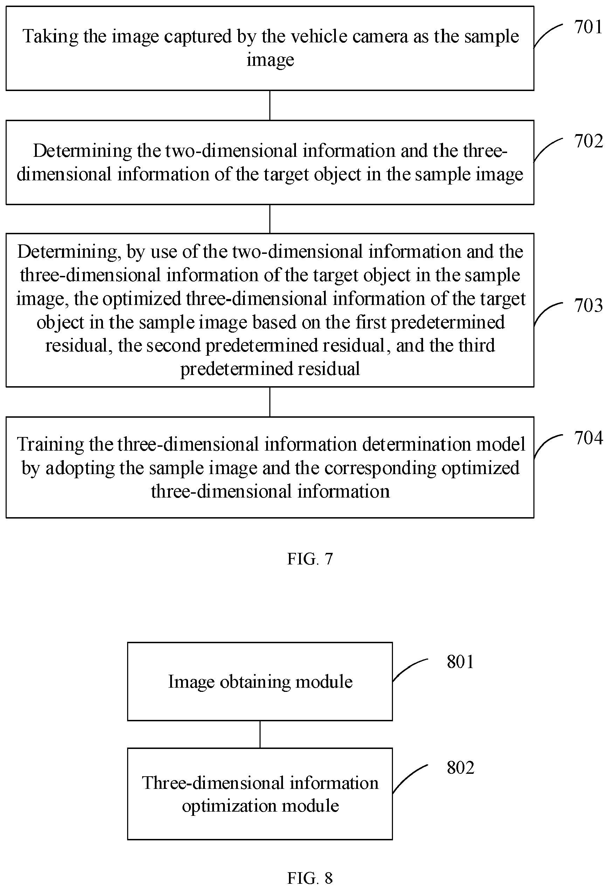

FIG. 7 is a flowchart of steps of training a three-dimensional information determination module in an embodiment of the present disclosure. Referring to FIG. 7, in an optional embodiment of the present disclosure, the three-dimensional information determination module can be trained and obtained by performing the following steps.

At step 701, the image captured by the vehicle camera is determined as the sample image.

At step 702, the two-dimensional information and the three-dimensional information of the target object in the sample image are determined.

At step 703, using the two-dimensional information and the three-dimensional information of the target object in the sample image, the optimized three-dimensional information of the target object in the sample image is determined based on the first predetermined residual, the second predetermined residual, and the third predetermined residual.

For example, when the sample image is an image captured by the single vehicle camera, the plurality of frames of sample images captured by the single vehicle camera are inter-frame tracked to correlate the target object in the plurality of frames of sample images; using the two-dimensional information and the three-dimensional information of the same correlated target object, the optimized three-dimensional information of the target object in the sample image is determined based on the first predetermined residual, the second predetermined residual, and the third predetermined residual.

For example, when the sample image is images captured by the plurality of cameras, the target object in the sample images captured by the plurality of vehicle cameras at the same moment is correlated; the plurality of frames of sample images captured by the same vehicle camera are inter-frame tracked to correlate the target object in the plurality of frames of sample images; using the two-dimensional information and the three-dimensional information of the same correlated target object in the plurality of frames of sample images captured by the plurality of vehicle cameras, the optimized three-dimensional information of the target object in the sample image is determined based on the first predetermined residual, the second predetermined residual, and the third predetermined residual.

At step 704, the three-dimensional information determination model is trained by adopting the sample image and the corresponding optimized three-dimensional information.

Specifically, the sample image can be used as the input of the three-dimensional information determination model. Thus, the three-dimensional information determination model outputs three-dimensional information, and parameters of the three-dimensional information determination model are adjusted based on a residual of three-dimensional information output by the model and the optimized three-dimensional information, so as to train the three-dimensional information determination model.

It should be noted that, for the sake of simple description, the method embodiments are all expressed as a combination of actions. However, those skilled in the art should know that the embodiments of the present disclosure are not limited by the described sequence of actions. According to the embodiments of the present disclosure, certain steps may be performed in different sequences or simultaneously. In addition, those skilled in the art should also know that the embodiments described in the specification are all preferred embodiments, and the involving actions are not necessarily required by the embodiments of the present disclosure.

FIG. 8 illustrates a structural block diagram of an apparatus for determining three-dimensional information of a target object according to an embodiment of the present disclosure. Referring to FIG. 8, the apparatus may specifically include the following modules: an image obtaining module 801 configured to obtain an image captured by a vehicle camera; and a three-dimensional information optimization module 802 configured to determine, based on a residual, optimized three-dimensional information of the target object in a target image, where the residual is determined based on two-dimensional information and reprojection information obtained by reprojecting three-dimensional information onto a two-dimensional plane, and the two-dimensional information and the three-dimensional information of the target object are determined in the image.

In an optional embodiment, the three-dimensional information optimization module 802 may include: a target image determination sub-module configured to determine a latest frame of image captured by the vehicle camera as the target image; an image information determination sub-module configured to determine the two-dimensional information and three-dimensional information of the target object in a plurality of frames of images in a sliding window; a reprojection sub-module configured to reproject the three-dimensional information corresponding to the target object in the plurality of frames of images onto the two-dimensional plane to obtain reprojection information; a residual determination sub-module configured to respectively determine the corresponding residual based on the two-dimensional information and the reprojection information corresponding to the target object in the plurality of frames of images; and an optimized information determination sub-module configured to determine the optimized three-dimensional information of the target object in the target image based on the residual corresponding to the target object in the plurality of frames of images.

In an optional embodiment, the residual determination sub-module may include: a factor graph construction unit configured to construct a factor graph by taking pose, size, and speed of the target object in the image as nodes; an expression obtaining unit configured to obtain a target residual expression for the target object in the image by optimizing the factor graph with a least squares problem, where the target residual expression is configured to represent the residual between the two-dimensional information and the reprojection information obtained by reprojecting the three-dimensional information; and a residual determination unit configured to determine, based on the two-dimensional information and the reprojection information corresponding to the target object in the plurality of frames of images, the corresponding residual in accordance with the target residual expression.

In an optional embodiment, the two-dimensional information includes a two-dimensional bounding box and two-dimensional feature line segments, and the three-dimensional information includes a three-dimensional bounding box and three-dimensional feature line segments; and the reprojection sub-module includes: a bounding box reprojection unit configured to reproject the three-dimensional bounding box corresponding to the target object in the plurality of frames of images onto the two-dimensional plane to obtain a reprojected bounding box; and a feature line segment reprojection unit configured to reproject the three-dimensional feature line segment corresponding to the target object in the plurality of frames of images onto the two-dimensional plane to obtain a reprojected feature line segment.

In an optional embodiment, the target residual expression includes a first predetermined residual expression, a second predetermined residual expression, and a third predetermined residual expression; and the residual determination unit may include: a first residual determination sub-unit configured to respectively determine a first predetermined residual between the two-dimensional bounding box and the reprojected bounding box corresponding to the target object in the plurality of frames of images; a second residual determination subunit configured to respectively determine a second predetermined residual between the two-dimensional feature line segment and the reprojected feature line segment corresponding to the target object in the plurality of frames of images; and a third residual determination subunit configured to determine, based on the three-dimensional bounding box of the target object in the plurality of frames of images and a predetermined motion model for the target object, a measured pose and a predicted pose of the target object in the plurality of frames of images, and determine a third predetermined residual between the measured pose and the predicted pose.

In an optional embodiment, the optimized information determination sub-module may include an optimized information determination unit configured to determine the optimized three-dimensional information of the target object in the target image based on the first predetermined residual, the second predetermined residual, and the third predetermined residual corresponding to the plurality of frames of images.

In an optional embodiment, the third residual determination sub-unit may include: a measured pose determination sub-unit configured to respectively determine the measured pose of the target object in the plurality of frames of images based on the three-dimensional bounding box of the target object in the plurality of frames of images and the predetermined motion model for the target object; a predicted pose determination sub-unit configured to predict a predicted pose of the target object in a current frame of image based on a measured pose of the target object in a previous frame of image; and a pose residual determination sub-unit configured to determine the third predetermined residual between the measured pose and the predicted pose of the target object in the plurality of frames of images.

In an optional embodiment, the measured pose determination sub-unit may include a model pose determination sub-unit configured to respectively determine the measured pose of the target object in the plurality of frames of images based on the three-dimensional bounding box of the target object in the plurality of frames of images and a dual-wheeled vehicle motion model for the target object.

In an optional embodiment, the optimized information determination sub-module may include: a first correlation unit configured to correlate target object in the plurality of frames of images captured by a plurality of vehicle cameras at the same moment; a second correlation unit configured to inter-frame track the plurality of frames of images captured by a same vehicle camera to correlate the target object in the plurality of frames of images; and the optimized information determination unit configured to determine the optimized three-dimensional information of the target object in the target image based on the residual corresponding to a same correlated target object in the plurality of frames of images captured by the plurality of vehicle cameras.

In an optional embodiment, the three-dimensional information optimization module 802 may include a model optimization sub-module configured to determine the three-dimensional information of the target object in the image by adopting a pre-trained three-dimensional information determination model. The three-dimensional information determination model is trained and obtained based on a sample image and optimized three-dimensional information corresponding to the target object in the sample image. The optimized three-dimensional information corresponding to the target object in the sample image is determined, by adopting two-dimensional information and three-dimensional information of the target object in the sample image, from a residual that is determined based on the two-dimensional information and the reprojection information obtained by reprojecting the three-dimensional information onto the two-dimensional plane.

In the embodiments of the present disclosure, the image captured by the vehicle camera is obtained, the two-dimensional and three-dimensional information of the target object is determined from the image, the residual is determined based on the two-dimensional information and the reprojection information obtained by reprojecting the three-dimensional information onto the two-dimensional plane, and the optimized three-dimensional information of the target object in the target image is determined based on the residual. Instead of depending upon the 3D point cloud information, the embodiments of the present disclosure mainly rely on the two-dimensional information and the three-dimensional information determined from the two-dimensional images. Due to the relatively high measurement accuracy of the two-dimensional information in the scenarios of rain and fog, night, and high speed, the method of the present disclosure has good robustness. On the other hand, calculation scale of the embodiments of the present disclosure is much smaller than that of the object-level SLAM optimization method, and can be directly run on an in-vehicle system, thereby solving the problem that the object-level SLAM system is difficult to be transplanted to the in-vehicle system.

As the apparatus embodiments are basically similar to the method embodiments, the description thereof is relatively simple, and the related parts can be referred to the part of the description regarding the method embodiments.

The embodiments of the present disclosure further provide a vehicle. The vehicle provides a processor, a memory, and a computer program stored on the memory and executable on the processor. The computer program, when executed by the processor, implements respective steps of the above-mentioned method for determining the three-dimensional information of the target object, and can achieve the same technical effects, which will not be repeated herein.

The embodiments of the present disclosure further provide a computer-readable storage medium, having a computer program stored thereon. The computer program, when executed by a processor, implements respective steps of the above-mentioned method for determining the three-dimensional information of the target object, and can achieve the same technical effects, which will not be repeated herein.

The embodiments in the specification are described in a progressive manner. Each embodiment focuses on differences from other embodiments, and the same or similar parts of the various embodiments can be referred to each other.

Those skilled in the art should understand that the embodiments of the present disclosure may be provided as a method, a vehicle using such method and a corresponding computer-readable storage medium. Therefore, the embodiments of the present disclosure may adopt a form of a complete hardware, a form of a complete software, or a form of a combination of software and hardware. Moreover, the embodiments of the present disclosure may adopt a form of a computer program product implemented on one or more computer-usable storage media (including but not limited to a disk storage, a compact disc read-only memory (CD-ROM), an optical storage, etc.) containing computer-usable program codes.

The embodiments of the present disclosure are described with reference to the flowcharts and/or the block diagrams of the methods, terminal devices (systems), and computer program products according to the embodiments of the present disclosure. It should be understood that each process and/or block in the flowchart and/or block diagram, and a combination of processes and/or blocks in the flowchart and/or block diagram can be implemented through computer program instructions. These computer program instructions can be provided to processors of general-purpose computers, special-purpose computers, embedded processors, or other programmable data processing terminal device to generate a machine, so that instructions executed by the processors of the computer or other programmable data processing terminal device generate apparatuses for implementing functions specified in a process or a plurality of processes in the flowchart and/or a block or a plurality of blocks in the block diagram.

These computer program instructions can also be stored in a computer-readable memory, which can guide a computer or other programmable data processing terminal device to work in a specific manner, so that the instructions stored in the computer-readable memory generate an article of manufacture including an instruction apparatus. The instruction apparatus implements the functions specified in a process or a plurality of processes in the flowchart and/or a block or a plurality of blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred embodiments of the embodiments of the present disclosure are described as above, those skilled in the art can make additional changes and modifications to these embodiments once they learn the basic creative concept.

Further, it should be noted that relational terms herein, such as "first" and "second", are used only for differentiating one entity or operation from another entity or operation, which, however do not necessarily require or imply that there should be any real relationship or sequence between the entities or operations. Also, terms "comprise", "include" or any other variations thereof are meant to cover non-exclusive including. Thus, the process, method, article or terminal device including a series of elements include not only those elements, but also include other elements that are not explicitly listed, or also include inherent elements of the process, method, article or terminal device. Without specific limitations, an element expressed as "comprising/comprise a ..." or "including/include a" does not exclude the presence of additional identical elements in the process, method, article or terminal device that includes the said element.

The above provides detailed description of the method, vehicle and computer-readable storage medium for three-dimensional information of a target object. Specific examples are used herein to illustrate the principles and implementations of the present disclosure. The description of the above embodiments is only used to facilitate understanding of the method and a core idea thereof of the present disclosure. In addition, for those skilled in the art, according to the concept of the present disclosure, changes can be made to the specific implementations and the scope of application. In summary, the content of the specification should not be construed as limitations of the present disclosure.

**Claims**

1. A computer-implemented method for determining three-dimensional information of a target object during intelligent driving, comprising:

    obtaining (101) an image captured by a vehicle camera;
    determining (102), based on a residual, optimized three-dimensional information of the target object in a target image, wherein the residual is determined based on two-dimensional information of other vehicles surrounding the target object and reprojection information obtained by reprojecting three-dimensional information of the other vehicles surrounding the target object onto a two-dimensional plane, and the two-dimensional information and the three-dimensional information of the target object are determined in the image, wherein:

    the target image is a latest frame of images captured by the vehicle camera,
    said determining (102), based on the residual, the optimized three-dimensional information of the target object in a target image comprises:

determining (303) the two-dimensional information and the three-dimensional information of the target object in a plurality of frames of the images in a sliding window;

reprojecting (304) the three-dimensional information corresponding to the target object in the plurality of frames of images onto the two-dimensional plane to obtain the reprojection information;

respectively determining (305) the corresponding residual based on the two-dimensional information and the reprojection information corresponding to the target object in the plurality of frames of images; and

determining (306) the optimized three-dimensional information of the target object in the target image based on the residual corresponding to the target object in the plurality of frames of images;

**characterized in that**

said respectively determining (305) the corresponding residual based on the two-dimensional information and the reprojection information corresponding to the target object in the plurality of frames of images comprises:

constructing a factor graph by taking pose, size, and speed of the target object in the image as nodes;

obtaining a target residual expression for the target object in the image by optimizing the factor graph with a least squares problem, wherein the target residual expression is configured to represent the residual between the two-dimensional information and the reprojection information obtained by reprojecting the three-dimensional information onto the two-dimensional plane; and

determining, based on the two-dimensional information and the reprojection information corresponding to the target object in the plurality of frames of images, the corresponding residual in accordance with the target residual expression;

the two-dimensional information comprises a two-dimensional bounding box and a two-dimensional feature line segment;

the three-dimensional information comprises a three-dimensional bounding box and a three-dimensional feature line segment;

said obtaining the reprojection information by reprojecting the three-dimensional bounding box corresponding to the target object in the plurality of frames of images onto the two-dimensional plane comprises:

reprojecting the three-dimensional bounding box corresponding to the target object in the plurality of frames of images onto the two-dimensional plane to obtain a reprojected bounding box; and

reprojecting the three-dimensional feature line segment corresponding to the target object in the plurality of frames of images onto the two-dimensional plane to obtain a reprojected feature line segment;

the target residual expression comprises a predetermined first residual expression, a predetermined second residual expression, and a predetermined third residual expression; and

said determining, based on the reprojection information and the two-dimensional information corresponding to the target object in the plurality of frames of images, the corresponding residual in accordance with the target residual expression, comprises:

respectively determining a first predetermined residual between the two-dimensional bounding box and the reprojected bounding box corresponding to the target object in the plurality of frames of images;

respectively determining a second predetermined residual between the two-dimensional feature line segment and the reprojected feature line segment corresponding to the target object in the plurality of frames of images; and

respectively determining, based on the three-dimensional bounding box of the target object in the plurality of frames of images and a predetermined motion model for the target object, a measured pose and a predicted pose of the target object in the plurality of frames of images, and determining a third predetermined residual between the measured pose and the predicted pose.

2. The method according to claim 1, wherein said determining the optimized three-dimensional information of the target object in the target image based on the residual corresponding to the target object in the plurality of frames of images comprises:

determining the optimized three-dimensional information of the target object in the target image based on the first predetermined residual, the second predetermined residual, and the third predetermined residual corresponding to the plurality of frames of images.

3. The method according to claim 1, wherein said respectively determining, based on the three-dimensional bounding box of the target object in the plurality of frames of images and the predetermined motion model for the target object, the measured pose and the predicted pose of the target object in the plurality of frames of images, and determining the third predetermined residual between the measured pose and the predicted pose comprises:

respectively determining the measured pose of the target object in the plurality of frames of images based on the three-dimensional bounding box of the target object in the plurality of frames of images and the predetermined motion model for the target object;
predicting a predicted pose of the target object in a current frame of image based on a measured pose of the target object in a previous frame of image; and
determining the third predetermined residual between the measured pose and the predicted pose of the target object in the plurality of frames of images.

4. The method according to claim 3, wherein the predetermined motion model is a dual-wheeled vehicle motion model.

5. The method according to claim 1, wherein said determining the optimized three-dimensional information of the target object in the target image based on the residual corresponding to the target object in the plurality of frames of images comprises:

correlating the target object in the plurality of frames of images captured by a plurality of vehicle cameras at the same moment;
inter-frame tracking the plurality of frames of images captured by a same vehicle camera to correlate the target object in the plurality of frames of images; and
determining the optimized three-dimensional information of the target object in the target image based on the residual corresponding to a same correlated target object in the plurality of frames of images captured by the plurality of vehicle cameras.

6. The method according to claim 1, wherein a plurality of frames of images captured by the vehicle camera are determined as sample images, and
wherein said determining, based on the residual, the optimized three-dimensional information of the target object in a target image comprises:

determining the two-dimensional information and the three-dimensional information of the target object in the sample images;
reprojecting the three-dimensional information corresponding to the target object in the sample images onto the two-dimensional plane to obtain the reprojection information;
determining the corresponding residual based on the two-dimensional information and the reprojection information corresponding to the target object in the sample images;
determining the optimized three-dimensional information of the target object in the sample images based on the residual corresponding to the target object in the sample images;
training a three-dimensional information determination model using the sample images and the optimized three-dimensional information of the target object in the sample images; and
determining the optimized three-dimensional information of the target object in the target image by using the trained three-dimensional information determination model.

7. A vehicle, comprising:

a processor;
a memory; and
a computer program stored in the memory and executable by the processor,
wherein the computer program, when executed by the processor, implements steps of the method for determining the three-dimensional information of the target object during intelligent driving according to any one of claims 1 to 6.

8. A computer-readable storage medium, having a computer program stored thereon, wherein the computer program, when executed by a processor, implements steps of the method for determining the three-dimensional information of the target object during intelligent driving according to any one of claims 1 to 6.

**Patentansprüche**

1. Computerimplementiertes Verfahren zur Bestimmung der dreidimensionalen Information eines Zielobjekts während einem intelligenten Fahren, aufweisend:

Erfassen (101) eines von einer Fahrzeugkamera aufgenommenen Bildes;
Bestimmen (102) einer optimierten dreidimensionalen Information des Zielobjekts in einem Zielbild auf der Grundlage eines Residuums, wobei das Residuum auf der Grundlage einer zweidimensionalen Information von anderen Fahrzeugen, die das Zielobjekt umgeben, und einer Reprojektionsinformation bestimmt wird, die durch Reprojizieren einer dreidimensionalen Information der anderen Fahrzeuge, die das Zielobjekt umgeben, auf eine zweidimensionale Ebene erhalten wird, und wobei die zweidimensionale Information und die dreidimensionale Informationen des Zielobjekts in dem Bild bestimmt werden, wobei:

das Zielbild ein letztes Bild der von der Fahrzeugkamera aufgenommenen Bilder ist,
das Bestimmen (102) der optimierten dreidimensionalen Information des Zielobjekts in einem Zielbild auf der Grundlage des Residuums aufweist:

Bestimmen (303) der zweidimensionalen Information und der dreidimensionalen Information des Zielobjekts in einer Vielzahl von Einzelbildern in einem gleitenden Fenster;
Reprojizieren (304) der dreidimensionalen Information, die dem Zielobjekt in der Vielzahl von Einzelbildern entspricht, auf die zweidimensionale Ebene, um die Reprojektionsinformation zu erhalten;
jeweiliges Bestimmen (305) des entsprechenden Residuums auf der Grundlage der zweidimensionalen Information und der Reprojektionsinformation, die dem Zielobjekt in der Vielzahl von Einzelbildern entspricht; und
Bestimmen (306) der optimierten dreidimensionalen Information des Zielobjekts in dem Zielbild auf der Grundlage des Residuums, das dem Zielobjekt in der Vielzahl von Einzelbildern entspricht;

**dadurch gekennzeichnet, dass**
das jeweilige Bestimmen (305) des entsprechenden Residuums auf der Grundlage der zweidimensionalen Information und der Reprojektionsinformation, das dem Zielobjekt in der Vielzahl von Einzelbildern entspricht, aufweist:

Konstruieren eines Faktorgraphen, indem Pose, Größe und Geschwindigkeit des Zielobjekts im Bild als Knotenpunkte verwendet werden;
Erhalten eines Ziel-Residuumausdrucks für das Zielobjekt in dem Bild durch Optimieren des Faktorgraphen mit einem Problem der kleinsten Quadrate, wobei der Ziel-Residuumausdruck so konfiguriert ist, dass er das Residuum zwischen der zweidimensionalen Information und der Reprojektionsinformation darstellt, die durch Reprojizieren der dreidimensionalen Information auf die zweidimensionale Ebene erhalten wird; und
Bestimmen, auf der Grundlage der zweidimensionalen Information und der Reprojektionsinformation, die dem Zielobjekt in der Vielzahl von Einzelbildern entspricht, des entsprechenden Residuums in Übereinstimmung mit dem Ziel-Residuumausdruck;
wobei die zweidimensionale Information ein zweidimensionales Begrenzungsfeld und ein zweidimensionales Merkmalsliniensegment aufweist;
wobei die dreidimensionale Information ein dreidimensionales Begrenzungsfeld und ein dreidimensionales Merkmalsliniensegment aufweist;
wobei das Erhalten der Reprojektionsinformation durch Reprojizieren des dreidimensionalen Begrenzungsfelds, das dem Zielobjekt in der Vielzahl von Einzelbildern entspricht, auf die zweidimensionale Ebene aufweist:

Reprojizieren des dreidimensionalen Begrenzungsfelds, das dem Zielobjekt in der Vielzahl von Einzelbildern entspricht, auf die zweidimensionale Ebene, um ein reprojiziertes Begrenzungsfeld zu erhalten; und
Reprojizieren des dreidimensionalen Merkmalsliniensegments, das dem Zielobjekt in der Vielzahl

15

von Einzelbildern entspricht, auf die zweidimensionale Ebene, um ein reprojiziertes Merkmalsliniensegment zu erhalten;

wobei der Ziel-Residuumausdruck einen vorbestimmten ersten Residuumausdruck, einen vorbestimmten zweiten Residuumausdruck und einen vorbestimmten dritten Residuumausdruck aufweist; und

das Bestimmen, auf der Grundlage der Reprojektionsinformation und der zweidimensionalen Information, die dem Zielobjekt in der Vielzahl der Einzelbilder entsprechen, des entsprechenden Residuums in Übereinstimmung mit dem Ziel-Residuumausdruck, aufweist:

jeweiliges Bestimmen eines ersten vorbestimmten Residuums zwischen dem zweidimensionalen Begrenzungsfeld und dem reprojizierten Begrenzungsfeld, das dem Zielobjekt in der Vielzahl der Einzelbilder entspricht;

jeweiliges Bestimmen eines zweiten vorbestimmten Residuums zwischen dem zweidimensionalen Merkmalsliniensegment und dem reprojizierten Merkmalsliniensegment, das dem Zielobjekt in der Vielzahl von Einzelbildern entspricht; und

jeweiliges Bestimmen, auf der Grundlage des dreidimensionalen Begrenzungsfelds des Zielobjekts in der Vielzahl von Einzelbildern und einem vorbestimmten Bewegungsmodell für das Zielobjekt, einer gemessenen Pose und einer vorhergesagten Pose des Zielobjekts in der Vielzahl von Einzelbildern, und Bestimmen eines dritten vorbestimmten Residuums zwischen der gemessenen Pose und der vorhergesagten Pose.

2. Verfahren nach Anspruch 1, bei dem das Bestimmen der optimierten dreidimensionalen Information des Zielobjekts im Zielbild auf der Grundlage des Residuums, das dem Zielobjekt in der Vielzahl von Einzelbildern entspricht, aufweist:
Bestimmen der optimierten dreidimensionalen Information des Zielobjekts in dem Zielbild auf der Grundlage des ersten vorbestimmten Residuums, des zweiten vorbestimmten Residuums und des dritten vorbestimmten Residuums, die der Vielzahl von Einzelbildern entsprechen.

3. Verfahren nach Anspruch 1, bei dem das jeweilige Bestimmen, auf der Grundlage des dreidimensionalen Begrenzungsfelds des Zielobjekts in der Vielzahl von Einzelbildern und einem vorbestimmten Bewegungsmodell für das Zielobjekt, der gemessenen Pose und der vorhergesagten Pose des Zielobjekts in der Vielzahl von Einzelbildern, und das Bestimmen eines dritten vorbestimmten Residuums zwischen der gemessenen Pose und der vorhergesagten Pose aufweist:

jeweiliges Bestimmen der gemessenen Pose des Zielobjekts in der Vielzahl von Einzelbildern auf der Grundlage des dreidimensionalen Begrenzungsfelds des Zielobjekts in der Vielzahl von Einzelbildern und des vorgegebenen Bewegungsmodells für das Zielobjekt;
Vorhersagen einer vorhergesagten Pose des Zielobjekts in einem aktuellen Einzelbild auf der Grundlage einer gemessenen Pose des Zielobjekts in einem vorherigen Einzelbild; und
Bestimmen des dritten vorbestimmten Residuums zwischen der gemessenen Pose und der vorhergesagten Pose des Zielobjekts in der Vielzahl von Einzelbildern.

4. Verfahren nach Anspruch 3, bei dem das vorbestimmte Bewegungsmodell ein Bewegungsmodell für ein Zweiradfahrzeug ist.

5. Verfahren nach Anspruch 1, bei dem das Bestimmen der optimierten dreidimensionalen Information des Zielobjekts im Zielbild auf der Grundlage des Residuums, das dem Zielobjekt in der Vielzahl von Einzelbildern entspricht, aufweist:

Korrelieren des Zielobjekts in der Vielzahl von Einzelbildern, die von einer Vielzahl von Fahrzeugkameras zum gleichen Zeitpunkt aufgenommen wurden;
Inter-Frame-Tracking der Vielzahl von Einzelbildern, die von derselben Fahrzeugkamera aufgenommen wurden, um das Zielobjekt in der Vielzahl von Einzelbildern zu korrelieren; und
Bestimmen der optimierten dreidimensionalen Information des Zielobjekts in dem Zielbild auf der Grundlage des Residuums, das einem gleichen korrelierten Zielobjekt in der Vielzahl von Einzelbildern entspricht, die von der Vielzahl von Fahrzeugkameras erfasst wurden.

6. Verfahren nach Anspruch 1, bei dem eine Vielzahl von Einzelbildern, die von der Fahrzeugkamera aufgenommen wurden, als Beispielbilder bestimmt werden, und

wobei das Bestimmen der optimierten dreidimensionalen Information des Zielobjekts in einem Zielbild auf der Grundlage des Residuums aufweist:

Bestimmen der zweidimensionalen Information und der dreidimensionalen Information des Zielobjekts in den Beispielbildern;
Reprojizieren der dreidimensionalen Information, die dem Zielobjekt in den Beispielbildern entspricht, auf die zweidimensionale Ebene, um die Reprojektionsinformation zu erhalten;
Bestimmen des entsprechenden Residuums auf der Grundlage der zweidimensionalen Information und der Reprojektionsinformation, die dem Zielobjekt in den Beispielbildern entspricht;
Bestimmen der optimierten dreidimensionalen Information des Zielobjekts in den Beispielbildern auf der Grundlage des Residuums, das dem Zielobjekt in den Beispielbildern entspricht;
Trainieren eines dreidimensionalen Informationsbestimmungsmodells unter Verwendung der Beispielbilder und der optimierten dreidimensionalen Information des Zielobjekts in den Beispielbildern; und
Bestimmen der optimierten dreidimensionalen Information des Zielobjekts im Zielbild unter Verwendung des dreidimensionalen Informationsbestimmungsmodells.

7.  Fahrzeug, aufweisend:

einen Prozessor;
einen Speicher; und
ein Computerprogramm, das im Speicher gespeichert und vom Prozessor ausführbar ist,
wobei das Computerprogramm, wenn es von dem Prozessor ausgeführt wird, Schritte des Verfahrens zur Bestimmung einer dreidimensionalen Information eines Zielobjekts während einem intelligenten Fahren nach einem der Ansprüche 1 bis 6 implementiert.

8.  Computerlesbares Speichermedium mit einem darauf gespeicherten Computerprogramm, wobei das Computerprogramm, wenn es von einem Prozessor ausgeführt wird, Schritte des Verfahrens zur Bestimmung einer dreidimensionalen Information eines Zielobjekts während einem intelligenten Fahren nach einem der Ansprüche 1 bis 6 implementiert.

**Revendications**

1.  Procédé mis en oeuvre par ordinateur permettant de déterminer des informations tridimensionnelles d'un objet cible pendant une conduite intelligente, comprenant:

obtenir (101) une image prise par une caméra de véhicule;
déterminer (102) une information tridimensionnelle optimisée de l'objet cible dans une image cible sur la base d'un résidu, dans lequel le résidu est déterminé sur la base d'une information bidimensionnelle d'autres véhicules entourant l'objet cible et d'une information de projection obtenue en projetant une information tridimensionnelle des autres véhicules entourant l'objet cible sur un plan bidimensionnel, et dans lequel l'information bidimensionnelle et l'information tridimensionnelle de l'objet cible dans l'image sont déterminées, dans lequel:

l'image cible est une dernière image parmi les images prises par la caméra du véhicule,
dans lequel déterminer (102) des informations tridimensionnelles optimisées de l'objet cible dans une image cible sur la base du résidu comprend:

déterminer (303) les informations bidimensionnelles et les informations tridimensionnelles de l'objet cible dans une pluralité d'images individuelles dans une fenêtre glissante;
reprojeter (304) de l'information tridimensionnelle correspondant à l'objet cible dans la pluralité d'images individuelles sur le plan bidimensionnel pour obtenir l'information de reprojection;
déterminer respectivement (305) le résidu correspondant sur la base des informations bidimensionnelles et des informations de projection correspondant à l'objet cible dans la pluralité d'images individuelles; et
déterminer (306) les informations tridimensionnelles optimisées de l'objet cible dans l'image cible sur la base du résidu correspondant à l'objet cible dans la pluralité d'images individuelles;

**caractérisé en ce que**

dans lequel déterminer respectivement (305) du résidu correspondant sur la base des informations bidimensionnelles et des informations de projection correspondant à l'objet cible dans la pluralité d'images individuelles comprend:

construire un graphe factoriel en utilisant une pose, une taille et une vitesse de l'objet cible dans l'image comme points nodaux;

obtenir d'une expression résiduelle cible pour l'objet cible dans l'image en optimisant le graphe factoriel avec un problème des moindres carrés, l'expression résiduelle cible étant configurée pour représenter le résidu entre l'information bidimensionnelle et l'information de projection obtenue en projetant l'information tridimensionnelle sur le plan bidimensionnel; et

déterminer, sur la base des informations bidimensionnelles et des informations de projection correspondant à l'objet cible dans la pluralité d'images individuelles, le résidu correspondant en fonction de l'expression du résidu cible;

dans lequel l'information bidimensionnelle comprend un champ de délimitation bidimensionnel et un segment de ligne caractéristique bidimensionnel;

dans lequel l'information tridimensionnelle comprend un champ de délimitation tridimensionnel et un segment de ligne caractéristique tridimensionnel;

dans lequel obtenir des informations de projection en projetant du champ de délimitation tridimensionnel correspondant à l'objet cible dans la pluralité d'images individuelles sur le plan bidimensionnel comprend:

reprojeter du champ de délimitation tridimensionnel correspondant à l'objet cible dans la pluralité d'images individuelles sur le plan bidimensionnel afin d'obtenir un champ de délimitation reprojeté; et

reprojeter du segment de ligne caractéristique tridimensionnel correspondant à l'objet cible dans la pluralité d'images individuelles sur le plan bidimensionnel afin d'obtenir un segment de ligne caractéristique reprojeté;

dans lequel l'expression de résidu cible comprend une première expression de résidu prédéterminée, une deuxième expression de résidu prédéterminée et une troisième expression de résidu prédéterminée; et

dans lequel déterminer, sur la base des informations de projection et des informations bidimensionnelles correspondant à l'objet cible dans la pluralité d'images individuelles, du résidu correspondant en fonction de l'expression du résidu cible comprend:

déterminer respectivement un premier résidu prédéterminé entre le champ de délimitation bidimensionnel et le champ de délimitation reprojeté correspondant à l'objet cible dans la pluralité d'images individuelles;

déterminer respectivement un deuxième résidu prédéterminé entre le segment de ligne caractéristique bidimensionnel et le segment de ligne caractéristique reprojeté correspondant à l'objet cible dans la pluralité d'images individuelles; et

déterminer respectivement, sur la base du champ de délimitation tridimensionnel de l'objet cible dans la pluralité d'images individuelles et d'un modèle de mouvement prédéterminé pour l'objet cible, une pose mesurée et une pose prédite de l'objet cible dans la pluralité d'images individuelles, et déterminer un troisième résidu prédéterminé entre la pose mesurée et la pose prédite.

2. Procédé selon la revendication 1, dans lequel déterminer des informations tridimensionnelles optimisées de l'objet cible dans l'image cible sur la base du résidu correspondant à l'objet cible dans la pluralité d'images individuelles comprend:
déterminer les informations tridimensionnelles optimisées de l'objet cible dans l'image cible sur la base du premier résidu prédéterminé, du deuxième résidu prédéterminé et du troisième résidu prédéterminé correspondant à la pluralité d'images individuelles.

3. Procédé selon la revendication 1, dans lequel déterminer respectivement, sur la base du champ de délimitation tridimensionnel de l'objet cible dans la pluralité d'images individuelles et d'un modèle de mouvement prédéterminé pour l'objet cible, la pose mesurée et la pose prédite de l'objet cible dans la pluralité d'images individuelles, et la détermination d'un troisième résidu prédéterminé entre la pose mesurée et la pose prédite comprend:

déterminer respectivement la pose mesurée de l'objet cible dans la pluralité d'images individuelles sur la base du champ de délimitation tridimensionnel de l'objet cible dans la pluralité d'images individuelles et du modèle de mouvement prédéterminé pour l'objet cible;

prédire une pose prédite de l'objet cible dans une image actuelle sur la base d'une pose mesurée de l'objet cible dans une image précédente; et

déterminer le troisième résidu prédéterminé entre la pose mesurée et la pose prédite de l'objet cible dans la pluralité d'images individuelles.

4. Procédé selon la revendication 3, dans lequel le modèle de mouvement prédéterminé est un modèle de mouvement pour un véhicule à deux roues.

5. Procédé selon la revendication 1, dans lequel déterminer des informations tridimensionnelles optimisées de l'objet cible dans l'image cible sur la base du résidu correspondant à l'objet cible dans la pluralité d'images individuelles comprend:

corréler l'objet cible dans la pluralité d'images individuelles prises par une multitude de caméras de véhicules au même moment;

le suivi inter-trame de la pluralité prises par la même caméra du véhicule, afin de corréler l'objet cible dans la pluralité; et

déterminer les informations tridimensionnelles optimisées de l'objet cible dans l'image cible sur la base du résidu correspondant à un même objet cible corrélé dans la pluralité d'images individuelles capturées par la pluralité de caméras de véhicule.

6. Procédé selon la revendication 1, dans lequel une pluralité d'images individuelles prises par la caméra du véhicule sont déterminées en tant qu'exemples d'images, et

dans lequel déterminer des informations tridimensionnelles optimisées de l'objet cible dans une image cible sur la base du résidu comprend:

déterminer l'information bidimensionnelle et l'information tridimensionnelle de l'objet cible dans les images d'exemple;

reproduire de l'information tridimensionnelle correspondant à l'objet cible dans les images d'exemple sur le plan bidimensionnel afin d'obtenir l'information de projection;

déterminer le résidu correspondant sur la base des informations bidimensionnelles et des informations de projection correspondant à l'objet cible dans les images d'exemple;

déterminer l'information tridimensionnelle optimisée de l'objet cible dans les images d'exemple sur la base du résidu correspondant à l'objet cible dans les images d'exemple;

entraîner d'un modèle de détermination d'informations tridimensionnelles en utilisant les images d'exemple et les informations tridimensionnelles optimisées de l'objet cible dans les images d'exemple; et

déterminer l'information tridimensionnelle optimisée de l'objet cible dans l'image cible en utilisant le modèle de détermination de l'information tridimensionnelle.

7. Véhicule, comprenant

un processeur;

une mémoire; et

un programme informatique stocké en mémoire et exécutable par le processeur,

dans lequel le programme informatique, lorsqu'il est exécuté par le processeur, met en oeuvre des étapes du procédé permettant de déterminer des informations tridimensionnelles d'un objet cible pendant une conduite intelligente selon l'une quelconque des revendications 1 à 6.

8. Support de stockage lisible par ordinateur sur lequel est stocké un programme informatique, ledit programme informatique, lorsqu'il est exécuté par un processeur, mettant en oeuvre des étapes du procédé permettant de déterminer des informations tridimensionnelles d'un objet cible pendant une conduite intelligente selon l'une quelconque des revendications 1 à 6.

Obtaining an image captured by a vehicle camera — 101

Determining, based on a residual, optimized three-dimensional information of the target object in a target, where the residual is determined based on two-dimensional information and projection information obtained by reprojecting three-dimensional information onto a two-dimensional plane, and the two-dimensional information and the three-dimensional information of the target object are determined in the image — 102

FIG. 1

FIG. 2

| | |
|---|---|
| Obtaining an image captured by a vehicle camera | 301 |
| Determining a latest frame of image captured by the vehicle camera as a target image | 302 |
| Determining two-dimensional information and three-dimensional information of the target object in a plurality of frames of images in a sliding window | 303 |
| Reprojecting the three-dimensional information corresponding to the target object in the plurality of frames of images onto a two-dimensional plane to obtain projection information | 304 |
| Respectively determining a corresponding residual based on the two-dimensional information and the projection information corresponding to the target object in the plurality of frames of images | 305 |
| Determining optimized three-dimensional information of the target object in the target image based on the residual corresponding to the target object in the plurality of frames of image | 306 |

FIG. 3

OS

f1  f2  f3

V

FIG. 4

FIG. 5

| Obtaining an image captured by a vehicle camera | 601 |

Determining the three-dimensional information of the target object in the image by adopting a pre-trained three-dimensional information determination model, wherein the three-dimensional information determination model is trained and obtained based on a sample image and optimized three-dimensional information corresponding to the target object in the sample image; and the optimized three-dimensional information corresponding to the target object in the sample image is determined, by adopting two-dimensional information and three-dimensional information of the target object in the sample image, from a residual that is determined based on the two-dimensional information and the projection information obtained by reprojecting the three-dimensional information onto the two-dimensional plane — 602

FIG. 6

Taking the image captured by the vehicle camera as the sample image /⎯ 701

Determining the two-dimensional information and the three-dimensional information of the target object in the sample image /⎯ 702

Determining, by use of the two-dimensional information and the three-dimensional information of the target object in the sample image, the optimized three-dimensional information of the target object in the sample image based on the first predetermined residual, the second predetermined residual, and the third predetermined residual /⎯ 703

Training the three-dimensional information determination model by adopting the sample image and the corresponding optimized three-dimensional information /⎯ 704

FIG. 7

Image obtaining module /⎯ 801

Three-dimensional information optimization module /⎯ 802

FIG. 8

**REFERENCES CITED IN THE DESCRIPTION**

**Patent documents cited in the description**

- US 2021174537 A1
- CN 111428765 A